# EUROPÄISCHE PATENTSCHRIFT

(11) **EP 1 329 352 B1**
(45) Veröffentlichungstag und Bekanntmachung des Hinweises auf die Patenterteilung: **10.12.2008**
(21) Anmeldenummer: 03000864.3
(22) Anmeldetag: 15.01.2003
(51) Int. Cl.: B60K 7/00, B60K 17/04

(54) **Antriebsanordnung, insbesondere für Nutzfahrzeuge**
Drive arrangement in particular for commercial vehicles
Ensemble entraînement, en particulier pour véhicules utilitaires

(30) Priorität: 18.01.2002 DE 10202053
(43) Veröffentlichungstag der Anmeldung: 23.07.2003
(73) Patentinhaber: Voith Turbo GmbH & Co. KG, 89522 Heidenheim (DE)
(72) Erfinder: Mühlberger, Uwe, 89522 Heidenheim (DE)
(74) Vertreter: Dr. Weitzel & Partner

(56) Entgegenhaltungen:
- EP-A- 0 509 221
- WO-A-01/03963
- DE-B- 1 227 783
- JP-A- 2001 315 534

## Beschreibung

Die Erfindung betrifft eine Antriebseinheit, insbesondere für ein Rad eines Fahrzeuges.

Antriebseinheiten für Radantriebe, insbesondere Einzelradantriebe, sind aus einer Vielzahl von Druckschriften bekannt. Stellvertretend wird dabei auf die Druckschrift EP 0 509 221 A2 verwiesen. Diese offenbart eine Antriebsachse mit als Radnabenmotor ausgebildeten Elektromotoren, Außenplanetengetrieben, Bremsen, Scheibenrädern und Reifen, wobei zwischen Antriebswelle und dem Elektromotor ein Untersetzungsgetriebe vorgesehen ist, der Elektromotor exzentrisch zur Antriebswelle angeordnet ist und das Gehäuse des Untersetzungsgetriebes einen Endes mit dem Achsstummel und anderen Endes mit dem Elektromotor verbunden ist. Der Elektromotor ist auf der Achsbrücke befestigt.

Ein wesentlicher Nachteil dieser Ausführung besteht darin, dass das Gehäuse des Elektromotors den über die Achse übertragenen Kräften ausgesetzt ist, was im schlimmsten Fall zur Beeinträchtigung der Funktion der Antriebsmaschine oder von Anschlußelementen führen kann bzw. einen erhöhten Verschleiß an den miteinander gekoppelten Elementen des Antriebes hervorruft - Elektromotor und Anschlusseinheiten, beispielsweise einer Drehmomentübertragungseinrichtung in Form eines Untersetzungsgetriebes aufgrund der dadurch bedingten Lageveränderung zueinander, beispielsweise Schiefstellung der miteinander in Eingriff stehenden Verzahnungen am Untersetzungsgetriebe. Wird beispielsweise als Elektromotor eine Asynchronmaschine eingesetzt, so wirkt sich eine Verformung des Gehäuses aufgrund von Kräften in der Achsstrucktur nachteilig aus, da der Luftspalt der Maschine prinzipbedingt klein sein muß.

Eine Vorrichtung, die dem Gegenstand des Anspruchs 1 am nächsten kommt, ist im Dokument DE 12 27 783 B dargestellt. Dieses Dokument offenbart eine Antriebseinheit zum Antrieb wenigstens eines Rades, umfassend eine Radnabe, insbesondere Radnabenantrieb, mit einer Radantriebswelle zum Antrieb der Radnabe, mit einer elektrischen Antriebsmaschine, die Antriebsmaschine ist über eine Drehmomentübertragungseinrichtung mit der Radantriebswelle gekoppelt, mit einer Radachse, wobei das Gehäuse der elektrischen Antriebsmaschine ist an der Innenwand eines Achskörpers befestigt und frei von in die Radachse eingeleiteten Kräften, ausgenommen den Antriebsdrehmomenten. Die Antriebsmaschine bleibt nicht frei von in die Radachse eingeleiteten Kräften.

Der Erfindung liegt daher die Aufgabe zugrunde, eine Antriebseinheit der genannten Art derart weiterzuentwickeln, dass die genannten Nachteile vermieden werden. Im einzelnen ist darauf abzustellen, die elektrische Antriebsmaschine frei von den an der Radachse wirkenden und über diese geleiteten Kräften zu halten. Die auf die Radachse wirkenden Belastungen sollen keinen Einfluß - weder funktional noch hinsichtlich der Lagezuordnung - auf die elektrische Antriebsmaschine und die mit dieser direkt oder indirekt gekoppelten leistungsübertragenden Elemente ausüben.

Die erfindungsgemäße Lösung ist durch die Merkmale des Anspruches 1 charakterisiert. Vorteilhafte Ausgestaltungen sind in den Unteransprüchen wiedergegeben.

Die Antriebseinheit zum Antrieb wenigstens eines Rades, umfassend eine Radnabe, insbesondere Radnabenantrieb mit einer Radantriebswelle zum Antrieb der Radnabe umfasst eine elektrische, wenigstens als Motor vorzugsweise als Motor und Generator betreibbare Antriebsmaschine, die exzentrisch zur Radantriebswelle angeordnet ist. Die Antriebsmaschine ist über eine Drehmomentübertragungseinrichtung mit der Radantriebswelle gekoppelt.
Es ist eine Radachse vorgesehen, umfassend einen Achskörper, welcher die Radantriebswelle und die Drehmomentübertragungseinrichtung umschließt und an welchem sich die Radnabe abstützt. Die Radachse umfasst des weiteren wenigstens eine mit dem Achskörper gekoppelte Achsgabel. Erfindungsgemäß ist das Gehäuse der elektrischen Antriebsmaschine an der Innenwand des Achskörpers befestigt und damit frei von in die Radachse eingeleiteten Kräften.

Mit der erfindungsgemäßen Lösung wird eine nachteilige Beeinflussung der Verbindungen zwischen den einzelnen, der Antriebseinheit angehörenden Elemente vermieden, da über die Radachse keine oder nur sehr geringfügig Kräfte in die elektrische Antriebsmaschine eingeleitete werden, welche in Kraftflussrichtung in den Antrieb weitergeleitet werden können und somit an den einzelnen leistungsübertragenden Elementen zur Auswirkung gelangen.

Der Achskörper ist im Bereich der axialen Erstreckung des einzelnen Rades, bei Zwillingsbereifung der Räder, angeordnet und erstreckt sich in Richtung der Fahrzeugmittenachse über die axiale Erstreckung der Räder hinaus. Er bildet dabei das Gehäuse für die Drehmomentübertragungseinrichtung, die Radantriebswelle und wenigstens teilweise auch für das Gehäuse der elektrischen Maschine.

Die Anordnung der elektrischen Antriebsmaschine erfolgt in axialer Richtung von der Fahrzeugmittenachse zum Rad oder den Rädern hin betrachtet wenigstens teilweise in einen Bereich, der durch die axiale Erstreckung der Räder charakterisiert ist. Dies bedeutet, dass die elektrische Antriebsmaschine in Umfangsrichtung vollständig, in axialer Richtung jedoch wenigstens teilweise vom Achskörper umschlossen wird. Der Befestigungsflansch für das Gehäuse der elektrischen Antriebsmaschine ist dazu am Innenumfang des Achskörpers ausgebildet. Es ist auch denkbar, den Achskörper in axialer Richtung zur Fahrzeugmittenachse hin dahingehend zu verlängern, dass die elektrische Maschine in axialer Richtung vollständig im Achskörper integriert ist.

Die erfindungsgemäße Lösung wird nachfolgend anhand von Figuren erläutert. Darin ist im einzelnen folgendes dargestellt::
- Figur 1: verdeutlicht anhand eines Ausschnittes eines Axialschnittes durch eine Rad-Radachsenanordnung eine erfindungsgemäße Anbindung der elektrischen Antriebsmaschine;
- Figur 2: verdeutlicht in einer Ansicht von oben die Anbindung weiterer Funktionselemente;
- Figur 3: verdeutlicht eine Perspektivansicht der Ausführung gemäß Figur 2.

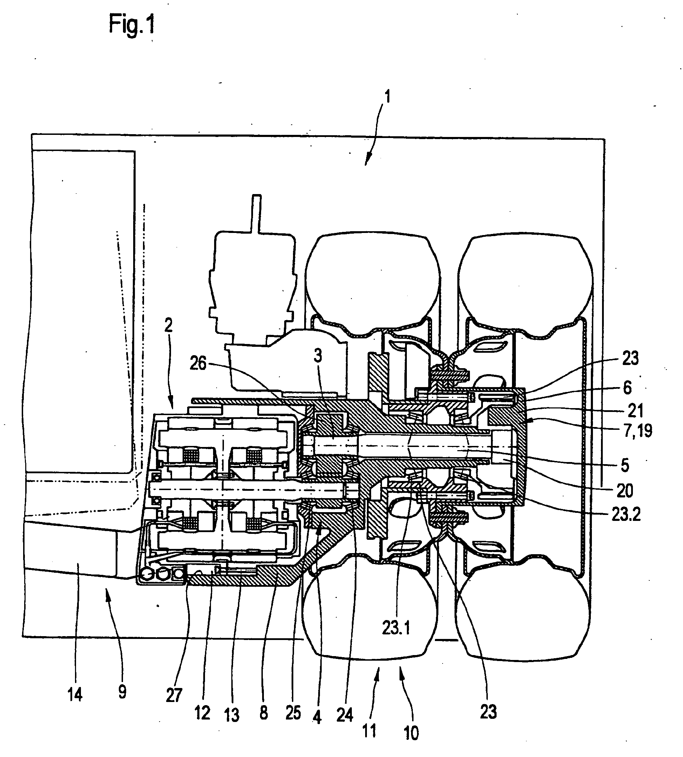

Die Figur 1 verdeutlicht anhand eines Ausschnittes aus einem Axialschnitt durch eine Rad-Radachsenanordnung den Grundaufbau einer erfindungsgemäß ausgeführten Antriebseinheit 1. Diese umfasst eine, wenigstens als Elektromotor, vorzugsweise auch generatorisch betreibbare elektrische Antriebsmaschine 2, deren Antriebswelle 3 über ein Untersetzungsgetriebe 4 mit der Radantriebswelle 5 in Triebverbindung steht. Die Radantriebswelle 5 ist mit der Radnabe 6 gekoppelt. Die Kopplung erfolgt über eine Getriebeeinheit 7. Die Radantriebswelle 5 wird durch einen Achskörper 8 geführt, an welchem sich die Radnabe 6 sowie das Untersetzungsgetriebe 4 abstützen. Der Achskörper 8 ist Bestandteil der Radachse 9, welche quasi den Rahmen für die einzelnen Elemente der elektrischen Antriebseinheit 1 bildet. Die Radantriebswelle 5 und die Getriebebaueinheit 7 sind im Bereich der axialen Erstreckung des Reifens, hier am Beispiel einer Zwillingsbereifung der Reifen 10 der Räder 11 angeordnet, welchen die Antriebseinheit 1 zugeordnet ist.

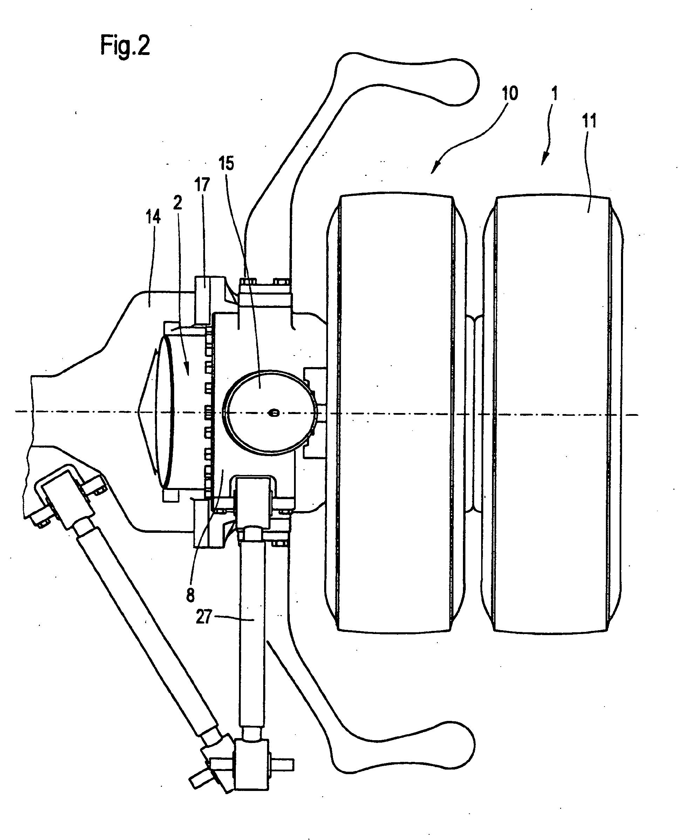

Die Antriebswelle 3 der elektrischen Antriebsmaschine 2 ist exzentrisch, jedoch vorzugsweise parallel zur Radantriebswelle 5 angeordnet. Die Triebverbindung erfolgt über das Untersetzungsgetriebe 4. Die elektrische Antriebsmaschine 2, insbesondere deren Gehäuse 12 ist erfindungsgemäß dabei an den Achskörper 8 angeflanscht und zwar am Innenumfang 27 am Befestigungsflansch 13. Ferner umschließt der Achskörper 8 das Untersetzungsgetriebe 4. Der Achskörper 8 weist ferner neben dem Befestigungsflansch 13 für die elektrische Antriebsmaschine 2 Anschraubflächen und Gewinde für die Starachsgabel 14, sowie weitere Elemente, beispielsweise Elemente für Bremseinrichtungen, beispielsweise Federbalgträger 15 oder einen Bremssattel für Scheibenbremsen 16, und/oder weitere Längsträger, wie in Figur 2 dargestellt, auf. Der Achskörper 8 ist dabei derart ausgeführt, dass dieser die elektrische Antriebsmaschine 2 in Umfangsrichtung über einen Teil von deren axialer Erstreckung umschließt. Dies bedeutet, dass der Achskörper 8 in Richtung zur in Fahrtrichtung ausgerichteten Fahrzeuglängs- bzw. Mittenachse ausgebildet ist und in axialer Richtung innerhalb der axialen Erstreckung der Räder 11 angeordnet ist und sich über diese zur Fahrzeugmittenachse hin hinaus erstreckt.

Die erfindungsgemäße Lösung ermöglicht es ferner, dass aufgrund der exzentrischen Anordnung der elektrischen Antriebsmaschine 2 Platz für den Bremssattel einer Scheibeneinrichtung oder andere Betätigungseinrichtungen von Bremselementen geschaffen werden kann. Ferner wird die durch die exzentrische Anordnung bedingte erforderliche Kopplung über entsprechende Übersetzungsstufen zur Drehzahlanpassung der elektrischen Antriebsmaschine 2 über eine Getriebestufe, hier des Untersetzungsgetriebes 4, genutzt. Die erfindungsgemäße Lösung ermöglicht es ferner, dass aufgrund der außerhalb der axialen Erstreckung der Räder 11 angeordneten Befestigungsflächen 17 und 18 für die Starachsengabel 14 bzw. für den Bremssattel durch einfaches Tauschen längerer oder kürzerer Starachsgabel die Antriebsachse 1 auf einfache Art und Weise an die Zwillingsbereifung oder eine Supersinglebereifung oder jeder andere gewünschte Spurbreite angepasst werden kann. Aufgrund des Vorsehens des Befestigungsflansches 13 können elektrische Antriebsmaschinen unterschiedlicher Größe eingebaut werden. Durch Tauschen der Stirnräder in der Getriebe- insbesondere Untersetzungsstufe kann die jeweils gewünschte Fahrzeuggeschwindigkeit realisiert werden.

Vorzugsweise ist der Achskörper 8 einer Antriebsachse 1 standardisiert für eine Vielzahl unterschiedlicher Antriebseinheiten 1 ausgeführt. Die unterschiedliche Dimensionierung der Antriebsmaschine sowie der Anschlusselemente wird durch die Gestaltung und Anordnung der entsprechenden Befestigungsflansche 13 und/oder die entsprechende Ausgestaltung der Befestigungsflächen 17 und 18 für weitere zusätzliche Funktionselemente realisiert.

Die elektrische Antriebsmaschine 2 kann vielgestaltig ausgeführt sein. Denkbar sind Ausführungen als Synchron- und Asynchronmaschinen. Gemäß einer besonders vorteilhaften Ausgestaltung ist die elektrische Antriebsmaschine 2 als Synchronmaschine mit transversaler Flussführung ausgebildet. Diese zeichnet sich durch eine hohe Leistungsdichte in bezug auf die Baugröße aus. Diese bietet ferner den Vorteil einer nahezu rotationssymmetrischen Anordnung.

Die Verbindung zwischen der Radantriebswelle 5 und der Radnabe 6 erfolgt über die Getriebeeinheit 7. Diese ist als Überlagerungsgetriebe in Form eines Planetenradsatzes 19 ausgebildet. Ein erstes Element des Planetenradsatzes 19, hier mit 20 bezeichnet, ist dabei drehfest mit der Radantriebswelle verbunden. Ein zweites Element 21 des Planetenradsatzes 19 ist drehfest mit der Radnabe gekoppelt. Ein drittes Element ist ortsfest und stützt sich am Achskörper 8 ab. Dieses ist mit 22 bezeichnet. Das erste Element 20 wird dabei vom Sonnenrad gebildet, das zweite Element 21 vom Steg- und das dritte Element 22 vom Hohlrad. Eine andere Ausführung ist ebenfalls denkbar und hängt hinsichtlich der Zuordnung von den konkret gewünschten und den einzustellenden Übersetzungsverhältnissen ab. Die Radnabe wiederum stützt sich über eine Lageranordnung 23 in Form einer O-Lagerung am Achskörper 8 ab. Die einzelnen Lager der Lageranordnung 23.1 und 23.2 sind als Kegelrollenlager ausgeführt.

Das Untersetzungsgetriebe 4 ist im dargestellten Fall als Stirnradstufe 24 mit der Radverzahnung ausgeführt. Andere Möglichkeiten sind ebenfalls denkbar. Da der Achskörper gleichzeitig das Gehäuse des Untersetzungsgetriebes 4 bildet, stützen sich die einzelnen Elemente des Untersetzungsgetriebes 4 ebenfalls über entsprechende Lageranordnungen am Achskörper 8 ab. Bei diesen handelt es sich um eine X-Lagerung. Auch hier werden vorzugsweise Kegelrollenschräglager verwendet.

Ein erstes Element 25 in Form eines Stirnrades ist dabei drehfest mit der Antriebswelle 3 der elektrischen Maschine 2 verbunden. Ein zweites Element 26 der Stirnradstufe 24 ist drehfest mit der Radantriebswelle 5 verbunden. Das erste Element wird dabei von einem Ritzel gebildet.

Die Figur 2 verdeutlicht anhand einer Ansicht von oben die räumliche Zuordnung der einzelnen Elemente der erfindungsgemäß gestalteten Antriebsachse 1. Daraus ist ersichtlich, dass sich der Achskörper 8 über die axiale Erstreckung der Räder 11 hinaus in Richtung zur Fahrzeugmitte hin erstreckt. Der Achskörper 8 umschließt dabei die elektrische Antriebsmaschine der Umfangsrichtung und über einen Teil ihrer axialen Erstreckung. Ferner sind die Anschlussflächen 17 und 18 für die Starachsdoppelgabel 14 und den Federbalgträger 15 einer Scheibenbremseinrichtung zu erkennen.

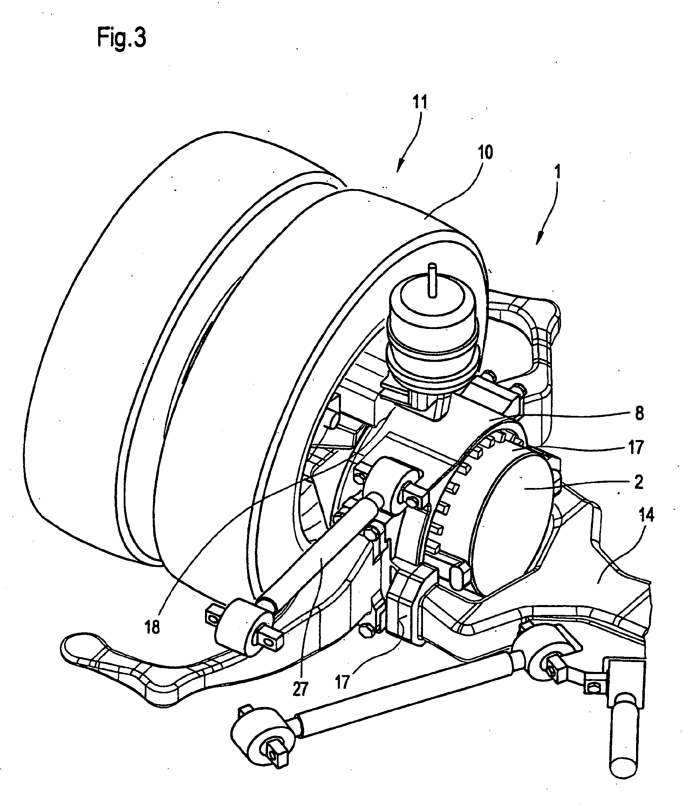

Die Figur 3 verdeutlicht demgegenüber noch einmal die Ansicht gemäß Figur 2 in perspektivischer Darstellung.

### Bezugszeichenliste

- 1: Antriebsachse
- 2: elektrische Antriebsmaschine
- 3: Antriebswelle
- 4: Untersetzungsgetriebe
- 5: Radantriebswelle
- 6: Radnabe
- 7: Getriebeeinheit
- 8: Achskörper
- 9: Radachse
- 10: Reifen
- 11: Räder
- 12: Gehäuse
- 13: Befestigungsflansch
- 14: Starachsgabel
- 15: Federbalgträger
- 17: Anschlussfläche
- 18: Anschlussfläche
- 19: Planetenradsatz
- 20: Erstes Element des Planetenradsatzes
- 21: Zweites Element des Planetenradsatzes
- 22: Drittes Element des Planetenradsatzes
- 23: Lageranordnung
- **23.1, 23.2**: **Lager**
- 24: Stirnradstufe
- 25: Erstes Element der Stirnradstufe
- 26: Zweites Element der Stirnradstufe
- 27: Längslenker

## Patentansprüche

1. Antriebseinheit (1) zum Antrieb wenigstens eines Rades, umfassend eine Radnabe, insbesondere Radnabenantrieb;
mit einer Radantriebswelle (5) zum Antrieb der Radnabe (6);
mit einer elektrischen Antriebsmaschine (2), die exzentrisch zur Radantriebswelle (5) angeordnet ist;
die Antriebsmaschine (2) ist über eine Drehmomentübertragungseinrichtung mit der Radantriebswelle (5) gekoppelt;
mit einer Radachse, umfassend einen Achskörper (8), welcher die Radantriebswelle (5) und die Drehmomentübertragungseinrichtung umschließt und an welchem sich die Radnabe (6) abstützt;
die Radachse (9) umfasst des weiteren wenigstens eine mit dem Achskörper (8) gekoppelte Achsgabel; wobei
das Gehäuse der elektrischen Antriebsmaschine (2) ist an der Innenwand des Achskörpers (8) befestigt und frei von in die Radachse (9) eingeleiteten Kräften, ausgenommen den Antriebsdrehmomenten.

2. Antriebseinheit nach Anspruch 1, **gekennzeichnet durch** die folgenden Merkmale:
der Achskörper (8) umfasst ferner Anschlussflächen für weitere Funktionselemente;
der Achskörper (8) umfasst Anschlussflächen zur Befestigung einer Achsgabel.

3. Antriebseinheit (1) nach einem der Ansprüche 1 oder 2, **dadurch gekennzeichnet, dass** der Achskörper (8) sich in Richtung der Fahrzeugmittenachse in axialer Richtung über die axiale Erstreckung der Räder hinaus erstreckt.

4. Antriebseinheit (1) nach einem der Ansprüche 1 bis 3, **dadurch gekennzeichnet, dass** die elektrische Antriebsmaschine (2) in axialer Richtung von der Fahrzeugmittenachse zu den Rädern hin betrachtet wenigstens teilweise in einen Bereich der durch die axiale Erstreckung der Räder charakterisiert ist, angeordnet ist

5. Antriebseinheit (1) nach einem der Ansprüche 1 bis 4, **dadurch gekennzeichnet, dass** am Innenumfang des Achskörpers (8) wenigstens ein der Befestigungsflansch (13) für das Gehäuse der elektrischen Antriebsmaschine (2) ausgebildet ist.

6. Antriebseinheit (1) nach einem der Ansprüche 1 bis 5, **dadurch gekennzeichnet, dass** die elektrische Antriebsmaschine (2) in Umfangsrichtung vollständig und in axialer Richtung wenigstens teilweise vom Achskörper (8) umschlossen wird.

7. Antriebseinheit (1) nach einem der Ansprüche 5 bis 6, **dadurch gekennzeichnet, dass** der Befestigungsflansch (13) im zur Fahrzeugmittenachse weisenden Endbereich des Achskörpers (8) angeordnet ist.

8. Antriebseinheit (1) nach einem der Ansprüche 1 bis 7, **dadurch gekennzeichnet, dass** die erste Drehmomentübertragungseinrichtung als Untersetzungsgetriebe (4) in Form einer Stirnradstufe ausgeführt ist.

9. Antriebseinheit (1) nach einem der Ansprüche 1 bis 8, **dadurch gekennzeichnet, dass** zwischen Radantriebswelle (5) und Radnabe (6) eine zweite Drehmomentübertragungseinrichtung angeordnet ist, welche als Planetenradsatz ausgeführt ist.

10. Antriebseinheit (1) nach Anspruch 9, **dadurch gekennzeichnet, dass** der Planetenradsatz ein mit der Radantriebswelle (5) drehfest verbindbares Sonnenrad, ein sich auf dem Achskörper (8) abstützendes Hohlrad sowie einen, den Abtrieb bildenden Steg umfasst, welcher drehfest mit der Radnabe (6) verbunden ist.

11. Antriebseinheit (1) nach einem der Ansprüche 1 bis 10, **dadurch gekennzeichnet, dass** die Abstützung der Radnabe (6) über eine Lageranordnung, umfassend wenigstens zwei Schrägkugellager oder Kegelrollenlager, welche in O-Anordnung angeordnet sind, erfolgt.

12. Antriebseinheit (1) nach einem der Ansprüche 1 bis 11, **dadurch gekennzeichnet, dass** die elektrische Antriebsmaschine (2) als Synchronmaschine mit transversaler Flussführung ausgeführt ist.

## Claims

1. A drive unit (1) for driving at least one wheel, comprising a wheel hub, especially a wheel hub drive, comprising a wheel drive shaft (5) for driving the wheel hub (6), an electric drive machine (2) which is arranged eccentrically to the wheel drive shaft (5), the drive machine (2) being coupled via a torque transmission device with the wheel drive shaft (5), a wheel axle comprising an axle body (8) which encloses the wheel drive shaft (5) and the torque transmission device and on which the wheel hub (6) is supported, the wheel axle (9) further comprising at least one axle guide coupled with the axle body (8), with the housing of the electric drive machine (2) being fastened to the inside wall of the axle body (8) and being free from any forces introduced into the wheel axle (9), except the drive torques.

2. A drive unit according to claim 1, **characterized by** the following features: the axle body (8) further comprises connection surfaces for further functional elements, and the axle body (8) comprises connection surfaces for fastening an axle guide.

3. A drive unit (1) according to one of the claims 1 or 2, **characterized in that** the axle body (8) extends in the direction of the central axis of the vehicle in the axial direction beyond the axial extension of the wheels.

4. A drive unit (1) according to one of the claims 1 to 3, **characterized in that,** when seen in the axial direction from the central axis of the vehicle towards the wheels, the electric drive machine (2) is arranged at least partly in a region which is **characterized by** the axial extension of the wheels.

5. A drive unit (1) according to one of the claims 1 to 4, **characterized in that** at least one fastening flange (13) for the housing of the electric drive machine (2) is arranged on the inside circumference of the axle body (8).

6. A drive unit (1) according to one of the claims 1 to 5, **characterized in that** the electric drive machine (2) is enclosed completely by the axial body (8) in the circumferential direction and at least partly in the axial direction.

7. A drive unit (1) according to one of the claims 5 to 6, **characterized in that** the fastening flange (13) is arranged in the end region of the axle body (8) facing towards the central axis of the vehicle.

8. A drive unit (1) according to one of the claims 1 to 7, **characterized in that** the first torque transmission device is arranged as a step-down gear (4) in the form of a spur gear set.

9. A drive unit (1) according to one of the claims 1 to 8, **characterized in that** a second torque transmission device which is arranged as planet gear set is disposed between wheel drive shaft (5) and wheel hub (6).

10. A drive unit (1) according to claim 9, **characterized in that** the planet gear set comprises a sun gear which can be connected in a torsionally rigid manner with the wheel drive shaft (5), a ring gear resting on the axle body (8) and a planet carrier which forms the driven shaft and is torsionally rigidly connected with the wheel hub (6).

11. A drive unit (1) according to one of the claims 1 to 10, **characterized in that** the support of the wheel hub (6) occurs through a bearing arrangement, comprising at least two angular contact ball bearings or tapered roller bearings which are arranged in O-arrangement.

12. A drive unit (1) according to one of the claims 1 to 11, **characterized in that** the electric drive machine (2) is arranged as a synchronous machine with transversal flux guidance.

## Revendications

1. Unité d'entraînement (1) pour l'entraînement d'au moins une roue, comprenant un moyeu de roue, en particulier entraînement de moyeu de roue ;
avec un arbre d'entraînement de roue (5) pour l'entraînement du moyeu de roue (6) ;
avec une machine motrice électrique (2) disposée en position excentrée par rapport à l'arbre d'entraînement de roue (5) ;
la machine motrice (2) est couplée à l'arbre d'entraînement de roue (5) par un dispositif de transmission du couple de rotation ;
avec un essieu, comprenant un corps d'essieu (8) qui renferme l'arbre d'entraînement de roue (5) et le dispositif de transmission du couple de rotation et sur lequel s'appuie le moyeu de roue (6) ;
l'essieu (9) comprend en outre au moins une fourche d'essieu couplée au corps d'essieu (8) ;
dans lequel le capot de la machine motrice électrique (2) est fixé sur la paroi intérieure du corps d'essieu (8) et n'est pas soumis aux forces exercées sur l'essieu (9), à l'exception des couples de rotation d'entraînement.

2. Unité d'entraînement selon la revendication 1, **caractérisée en ce que** :
le corps d'essieu (8) comprend en outre des surfaces de raccordement pour d'autres éléments fonctionnels ;
le corps d'essieu (8) comprend des surfaces de raccordement pour la fixation d'une fourche d'essieu.

3. Unité d'entraînement (1) selon l'une des revendications 1 ou 2, **caractérisée en ce que** le corps d'essieu (8) s'étend dans la direction de l'axe médian du véhicule dans le sens axial au-delà de l'étendue axiale des roues.

4. Unité d'entraînement (1) selon l'une des revendications 1 à 3, **caractérisée en ce que** la machine motrice électrique (2) est disposée, vue dans le sens axial depuis l'axe médian du véhicule vers les roues, au moins partiellement dans une zone **caractérisée par** l'étendue axiale des roues.

5. Unité d'entraînement (1) selon l'une des revendications 1 à 4, **caractérisée en ce qu'**au moins une des brides de fixation (13) pour le capot de la machine motrice électrique (2) est formée sur la circonférence intérieure du corps d'essieu (8).

6. Unité d'entraînement (1) selon l'une des revendications 1 à 5, **caractérisée en ce que** la machine motrice électrique (2) est entourée complètement dans le sens de la circonférence et au moins partiellement dans le sens axial par le corps d'essieu (8).

7. Unité d'entraînement (1) selon l'une des revendications 5 à 6, **caractérisée en ce que** la bride de fixation (13) est disposée dans la partie d'extrémité du corps d'essieu (8) dirigée vers l'axe médian du véhicule.

8. Unité d'entraînement (1) selon l'une des revendications 1 à 7, **caractérisée en ce que** le premier dispositif de transmission du couple de rotation est construit comme un réducteur (4) prenant la forme d'un étage de roues droites.

9. Unité d'entraînement (1) selon l'une des revendications 1 à 8, **caractérisée en ce qu'**il est prévu entre l'arbre d'entraînement de roue (5) et le moyeu de roue (6) un deuxième dispositif de transmission du couple de rotation réalisé comme un engrenage à train planétaire.

10. Unité d'entraînement (1) selon la revendication 9, **caractérisée en ce que** l'engrenage à train planétaire comprend une roue solaire pouvant être reliée avec l'arbre d'entraînement de roue (5) de manière solidaire en rotation, une couronne de train planétaire qui s'appuie sur le corps d'essieu (8) et une barrette formant la sortie, qui est reliée de manière solidaire en rotation au moyeu de roue (6).

11. Unité d'entraînement (1) selon l'une des revendications 1 à 10, **caractérisée en ce que** l'appui du moyeu de roue (6) est réalisé par une disposition de roulements comprenant au moins deux roulements obliques à billes ou roulements à rouleaux coniques disposés en forme de O.

12. Unité d'entraînement (1) selon l'une des revendications 1 à 11, **caractérisée en ce que** la machine motrice électrique (2) est réalisée comme une machine synchrone à flux transversal.
